# EUROPEAN PATENT APPLICATION

(11) **EP 3 917 002 A1**
(43) Date of publication of application: **01.12.2021**
(21) Application number: 21176674.6
(22) Date of filing: 28.05.2021
(51) Int. Cl.: H02S 20/24, F24S 25/13, F24S 25/16, F24S 25/65, F24S 25/70

(54) **SUPPORT STRUCTURE FOR INSTALLING SOLAR PANELS**

(30) Priority: 29.05.2020 BE 202005380; 20.07.2020 BE 202005544
(71) Applicant: Avasco Solar NV, 8790 Waregem (BE)
(72) Inventor: BACKERS, Eddy, 8600 OOSTKERKE (DIKSMUIDE) (BE)
(74) Representative: Cardoen, Annelies Andréa C.

(57) **Abstract**

Support structure (1) for installing solar panels on a surface, wherein this support structure (1) comprises at least a first and a second base unit (2), wherein each base unit (2) comprises a base profile (3) and a top structure which is connected to this base profile (3), wherein each base profile (3) comprises a first end (6) and a second end (7) situated opposite this first end (6), and at least said first end (6) of the base profile (3) of the first base unit (2) and said second end (7) of the base profile (3) of the second base unit (2) are coupleable to each other, wherein, to this end, this first end (6) is tapered or expanded and this second end (7) is form-fitting with this first end (6).

## Description

The present invention relates to a support structure for installing solar panels on a surface, wherein this support structure comprises at least a first and a second base unit, wherein each base unit comprises an elongate base profile which is provided to be connected directly or indirectly to the surface and a top structure which is connected to this base profile and is provided to support at least one solar panel at an angle to the base profile.

Solar panels (photovoltaic panels) have to be installed so as to face the sun in an optimum way. Furthermore, the panels have to be installed in a strong and stable manner. In order to install these panels, a support structure is used, for example, in which the panels are then provided to be connected to this support structure. By means of a support structure, it is possible to install the panels at a specific angle, so that they face the sun in an optimum way. Installing said panels is a time-consuming operation, not least because it has to be ensured that the panels and also the support structure are positioned correctly.

The present invention specifically relates to support structures for flat roofs. Said base profile of a base unit is then preferably connected to a flat roof in such a way that the base profile extends virtually parallel to this flat roof and thus extends virtually horizontally. By means of the top structure which is connected to the base profile, it is possible to connect a solar panel to the base profile at an angle and thus in a position which is as optimal as possible for collecting sunlight.

Various kinds of support structures for solar panels are known in the field. Most support structures comprise one or more base units with profiles, being a base profile which is provided to be connected to a surface, and two upright profiles or profile parts, wherein these profiles are connected to each other in such a way that, together, they form a triangle. A panel is then provided to be connected to an upright profile /profile part and be supported in such a way that this panel extends virtually parallel to this upright profile/profile part and thus extends at an angle to the base profile.

It is common to install several panels on a surface. It is then also common to attach several base units to one surface. It may be desirable to connect successive base units to each other. Thus, the base profiles are often connected to each other in such a way that two or more base profiles extend in succession along one line. The respective fitted panels then also extend successively. Currently, the base profiles are connected to each other by means of fastening means such as screws, bolts and nuts, etc. The drawbacks thereof are that it takes time to connect the base profiles of two base units to each other, additional fastening means are necessary and the base profiles are not always aligned when the base profiles are attached. The need for fastening means is a problem because said surfaces are often flat roofs. If someone forgets to bring the fastening means and/or drops the fastening means, this results in a considerable waste of time during installation of the panels. An existing base unit of a support structure is illustrated in BE1018790.

It is therefore an object of the present invention to provide a support structure in which the base units are connectable to each other in a simple way.

This object is achieved by providing a support structure for installing solar panels on a surface, wherein this support structure comprises at least a first and a second base unit, wherein each base unit comprises an elongate base profile which is provided to be connected directly or indirectly to the surface and a top structure which is connected to this base profile and is provided to support a solar panel at an angle to the base profile, wherein each base profile, viewed along its longitudinal direction, comprises a first end and comprises a second end situated opposite this first end, and at least said first end of the base profile of the first base unit and said second end of the base profile of the second base unit are coupleable to each other, wherein, to this end, this first end is tapered or expanded and this second end is form-fitting with this first end in such a way that the first end of the base profile of the first base unit and the second end of the base profile of the second base unit are coupleable to each other by sliding these ends inside each other. If the first end of the base profile of the first base unit is tapered, this first end is then slidably accommodable in the second end of the base profile of the second base unit. If the first end of the base profile of the first base unit is expanded, then the second end of the base profile of the second base unit is slidably accommodable in the first end of the base profile of the first base unit.

Here, it is then possible to slide said ends inside each other in a simple manner to attach/couple two base profiles, thus two base units, to each other. By means of a tapered first end or an expanded first end and a form-fitting second end, it is moreover ensured that the connected base profiles extend along the same direction and are thus in a straight line. This may be achieved without modifications or with slight modifications at the location of said second end, as said first end is of a tapered or expanded design. Thus, the second end may have virtually the same cross section as the portion of the base profile which is immediately adjacent to the second end. When two base profiles are connected to each other here, a portion of one base profile is inside the other base profile. As a result thereof, it is not necessary to provide additional fastening means and/or said ends do not have to be provided with additional fastening elements. The reason for this is that it is then possible to connect each base profile to the surface. Obviously, it is still possible to provide additional fastening means. Said ends can obviously be provided with corresponding fastening elements in order to reinforce the connection between the base profiles. The connection between these fastening elements is then preferably easy to bring about in order to keep coupling the base profiles to each other simple. In this way, the connection between these fastening elements may be brought about by sliding said ends inside each other.

Preferably, the first ends of said base profiles are virtually identical and the second ends of said base profiles are virtually identical as well, so that the second end of the base profile of the first base unit is also coupleable to the first end of the base profile of the second base unit by sliding these ends inside each other. This makes it possible to connect the base units to each other in a simple way. Thus, it is easy to successively attach the base units to a surface without having to consider which base unit should be fitted first, which obviously makes fitting quicker. Furthermore preferably, said base profiles are virtually identical and still more preferably, these base units are virtually identical. It is then possible to provide standard base units. If desired, it is in addition possible to provide start base units or stop base units in order to provide these, for example at a start and/or an end, with multiple base units connected to each other. Using standard base units facilitates the production and installation of support structures.

In a preferred embodiment, the first end of the base profile of the first base unit comprises at least one first fastening element and the second end of the base profile of the second base unit comprises a second fastening element which corresponds to this first fastening element in order to additionally fasten the base profiles to each other when said first and second end are coupled to each other by sliding these ends inside each other. These fastening elements ensure a secure mutual connection between the base profiles which are coupled to each other, as a result of which additional fastening means, such as screws, nuts and bolts, etc. to produce a stronger coupling between the base profiles become superfluous. This saves a considerable amount of time and facilitates coupling of the base profiles to each other. There may be two or more such first fastening elements and correspondingly also two or more such second fastening elements.

Furthermore preferably, the at least one first fastening element is a click-fit element so that the base profiles of the base units are coupleable to each other in a click-fittable way. The base profiles are then additionally connected to each other by means of a click-fit connection, which benefits the connection between the two base profiles. In addition, it is easy to bring about click-fit connections and this may, for example, occur when the ends are pushed inside each other, which benefits quick coupling of two base profiles and thus of two base units. In an alternative embodiment, the click-fit element is the second fastening element.

Still furthermore preferably, the click-fit element is displaceable and the second fastening element which corresponds to this click-fit element is a fixing opening, wherein the click-fit element is provided to extend through this fixing opening when said first and second end are coupled to each other by sliding these ends inside each other. Due to the fact that the click-fit element in this case extends through the fixing opening, a very strong coupling between two base profiles is achieved. Here, the fixing opening is present in the second end of the base profile of the second base unit. Here, the position of the fixing opening is preferably chosen to be such that virtually the entire length of the tapered or expanded first end extends in or around the second end when the click-fit element extends through the fixing opening. This therefore also means that, in the coupled position, virtually the entire length of the tapered or expanded first end extends in or around the second end.

Most preferably, the first end of the base profile of the first base unit is in addition tapered, wherein this first end to this end comprises a tapered base part having an outer surface, wherein the click-fit element is connected to this base part and can assume at least two positions with respect to this base part, being a base position in which the click-fit element extends beyond the outer surface of this base part, viewed along a plane at right angles to the longitudinal direction of the base profile, and a pushed-in position in which the click-fit element extends virtually inside the dimensions of this base part, viewed along a plane at right angles to the longitudinal direction of the base profile. The base position is the standard position which the click-fit element assumes when no forces, such as forces to displace the click-fit element, act on the click-fit element. If two base profiles are connected to each other here, and because said first end is tapered, a force is exerted on the click-fit element while the base profiles are pushed inside each other which pushes in the click-fit element and thus keeps it in its pushed-in position. Once the click-fit element extends at the location of the fixing opening, the click-fit element moves back to its base position and thus through the fixing opening since obviously no forces are exerted on the click-fit element at the location of this fixing opening. This click-fit element preferably is a resilient element. The base profiles are preferably made of metal, as a result of which it is easy to provide a resilient component.

The base profiles are, for example, C-profiles. C-profiles have a certain sturdiness and can easily be provided with a tapered or an expanded end. These C-profiles comprise a rectangular base plate, two rectangular upright plates which are connected to the base plate in such a way, at an angle of virtually 90°, that the base plate and the upright plates together form a U-shaped cross section. Furthermore, these base profiles then comprise two limbs, each of which is connected to a respective upright plate parallel to the base plate, so that a C-shaped cross section is then formed. Here, the first end of the base profile of the first base unit may then comprise, for example, two said first fastening elements, with each upright plate then being provided with a said first fastening element, and the second end of the base profile of the second base unit here then has two second fastening elements, with each upright plate comprising a said second fastening element. These two pairs of corresponding fastening elements then extend on two mutually opposite parts, in such a way that a very strong coupling between two base profiles can be brought about. Furthermore preferably, these two pairs of corresponding fastening elements also extend a distance apart, viewed along the longitudinal direction of the base profiles connected to each other, in order to allow less play between the base profiles connected to each other.

In a highly preferred embodiment, each top structure comprises a top profile, wherein the top profile is folded and connected to the base profile in such a way that said profiles together, in use, form a triangle and wherein at least one solar panel is provided to be connected to the top profile. A triangle is a strong structure, as a result of which a solar panel is then installed in a stable manner by means of such a support structure. Due to the fact that all or virtually all components here are profiles, such a support structure is also straightforward to produce. In addition, folding over a profile in order to form, for example, two adjoining profile parts which extend along different directions is simple. It is possible here to provide different types of top profiles resulting in different types of base units which can connect solar panels to the base profile at different angles. Here, the top structure may comprise one such top profile, but may also comprise two or more such top profiles. Thus, the top structure may comprise two top profiles, in which two solar panels are provided to be connected to the respective top profiles. The embodiment of the top profiles may be such that the orientation of the solar panels is similar or the embodiment of the top profiles may be such that the orientation of the solar panels is opposite. The first is suitable, for example, for a south-facing arrangement of the solar panels. The latter is suitable, for example, for an east/west-facing arrangement of the solar panels. In this way, it is easy to place the panels in such a way that they can collect solar radiation in an optimum manner. It is also possible here to provide different types of top profiles for different arrangements, for example south-facing arrangements and east/west-facing arrangements, depending on the roof on which the solar panels are to be placed. For south-facing arrangements, it is possible, for example, to provide a top profile which is folded and connected to the base profile in such a way that the top profile has a first profile part which forms an angle with the base profile of between 10° and 80°, preferably of between 20° and 50°, and is connected to the base profile, and has a second profile part which adjoins this first profile part and forms an angle with the first profile part of between 80° and 90° and is connected to the base profile. Here, it is then provided that one solar panel is connected to this first profile part. For east/west arrangements, it is possible, for example, to provide a top profile which is folded and connected to the base profile in such a manner that the top profile has a first profile part which forms an angle with the base profile of between 10° and 80°, preferably of between 20° and 50°, and is connected to the base profile, and a second profile part which adjoins this first profile part and makes an angle with the base profile which is virtually opposite to the first-mentioned angle and is connected to the base profile. Here, it is then provided that one solar panel is connected to the first profile part and one solar panel is connected to the second profile part. For east/west-facing arrangements, it is also possible to provide two top profiles.

Furthermore preferably, the respective ends of the top profile are connected to the base profile. Still furthermore preferably, said ends of the top profile are provided to be connected to the base profile at a distance from the first end and the second end, respectively, so that said ends of the base profile are freely accessible. Here, the base profiles of two base units are then always coupleable to each other in a simple manner.

Furthermore preferably, the edges of the top profile which extend along the longitudinal direction are folded over. This benefits the safety of the person who fits the panels by means of this support structure, because he or she cannot injure himself or herself on folded-over edges.

In a specific embodiment, the top profile is folded in such a way that the top profile comprises a support profile part which extends along a first direction and a bearing profile part which adjoins this support profile part and extends along a second direction which forms an angle with the first direction, and wherein this top profile is connected to the base profile in such a way that said profiles together, in use, form a triangle and wherein a solar panel is provided to be connected to the support profile part. This embodiment is suitable, for example, for a south-facing arrangement. The first direction and the second direction may intersect, for example, at an angle of virtually 90°.

In another specific embodiment, the top profile is folded in such a way that the top profile comprises a first support profile part which extends along a first direction and a second support profile part which adjoins this first support profile part and extends along a second direction, wherein the first and the second support profile part together form an obtuse angle and wherein the top structure furthermore comprises a central support which connects the top profile to the base profile at the location of the transition between the first support profile part and the second support profile part in a supporting way, wherein, in use, said profiles together with the central support form two mutually opposite triangles and wherein a solar panel is provided to be connected to the first support profile part and a solar panel is provided to be connected to the second support profile part. This embodiment is highly suitable for an east/west-facing arrangement. Here, the central support provides additional support for the top profile, as a result of which this base unit can readily support two solar panels. This central support is preferably also a profile, so that the entire base unit is then simple to produce. The central support preferably forms an angle with the base profile of between virtually 80° and 90° and still more preferably is virtually 90°, so that the support of the top profile is as optimal as possible. Preferably, the first support profile part and the second support profile part are virtually of equal length, so that the top profile and the base profile together form an isosceles triangle.

The present invention will now be explained in more detail by means of the following detailed description of a preferred embodiment of a support structure according to the present invention. The sole aim of this description to give illustrative examples and to indicate further advantages and features, and can therefore by no means be interpreted as a limitation of the area of application of the invention or of the patent rights defined in the claims.

In this detailed description, reference numerals are used to refer to the attached drawings, in which:
- ***Fig. 1*** shows a perspective view of a support structure according to the invention for a south-facing arrangement, in which this support structure comprises four base units;
- ***Fig. 2*** shows a perspective view of one base unit of the support structure illustrated in Fig. 1;
- ***Fig. 3*** shows a detail view of Fig. 2 at the location of the first end of the base profile of the base unit;
- ***Fig. 4*** shows a detail view of Fig. 2 at the location of the second end of the base profile of the base unit;
- ***Fig. 5*** shows a detail view of Fig. 1 at the location of the connection between two base profiles of two base units;
- ***Fig. 6*** shows a front view of a base profile of the base unit illustrated in Fig. 2 at the location of the first end;
- ***Fig. 7*** shows a perspective view of a first embodiment of a base unit of a support structure according to the invention for an east/west-facing arrangement;
- ***Fig. 8*** shows a perspective view of a second embodiment of a base unit of a support structure according to the invention for an east/west-facing arrangement.

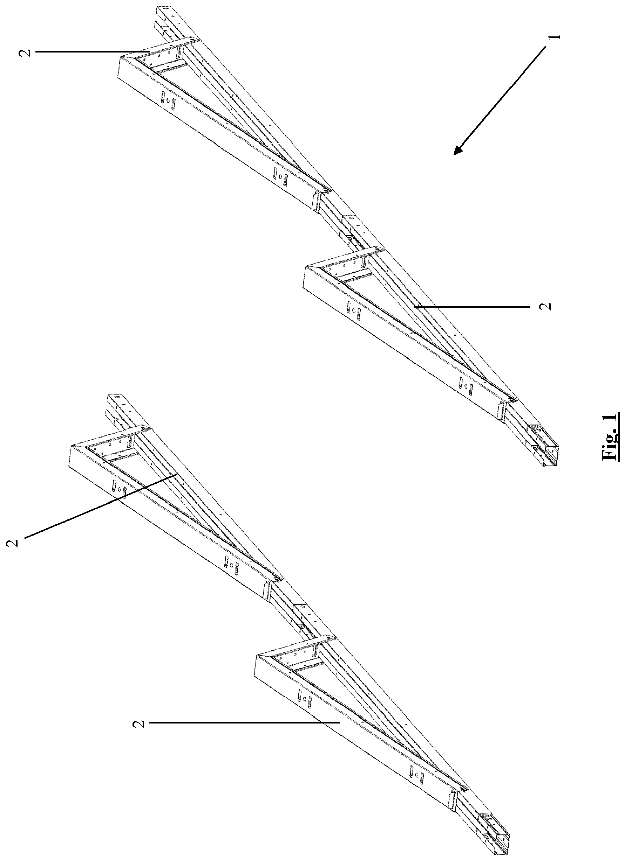

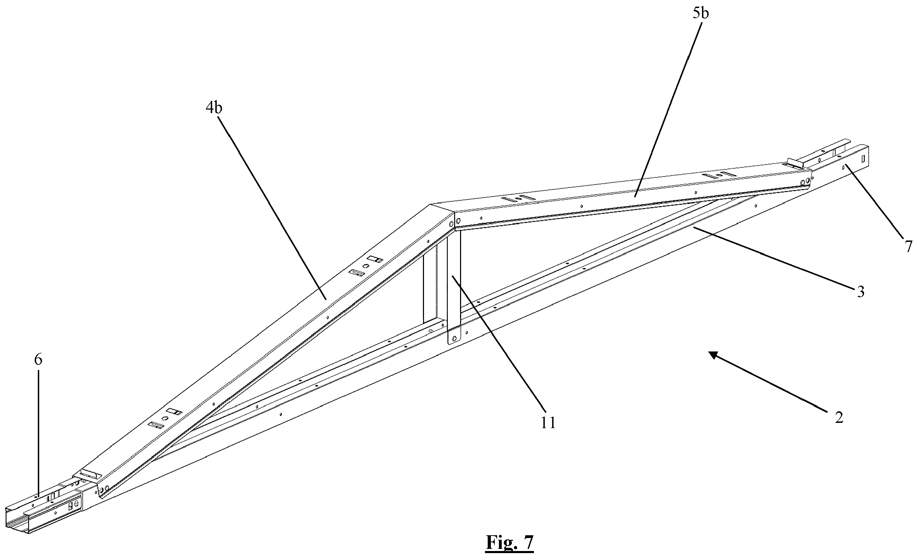

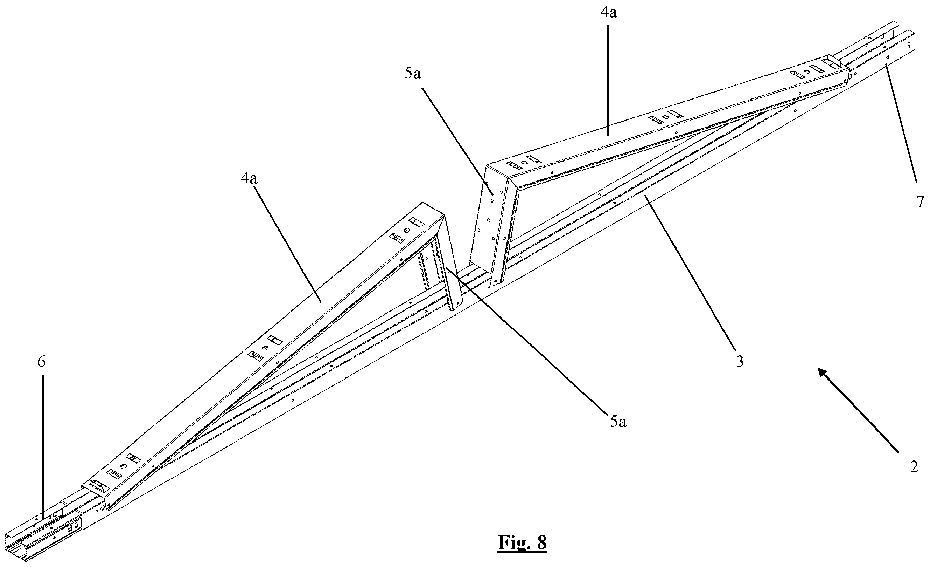

Figs. 1 to 6 relate to a support structure (1) according to the invention for a south-facing arrangement. Figs. 7 and 8 relate to support structures (1) according to the invention for an east/west-facing arrangement. Below, the south-facing arrangement is discussed first, followed by the east/west-facing arrangement.

The support structure (1), as illustrated here in Fig. 1, comprises four identical base units (2). Obviously, a support structure (1) may also comprise more or fewer base units (2), depending on the number of solar panels to be fitted.

Each base unit (2) comprises a base profile (3), a folded top profile (4a, 5a) having a support profile part (4a) and a bearing profile part (5a) which extend at an angle to each other, wherein these profiles (3, 4a, 5a) are provided to form a triangle in use. The ends of the top profile (4a, 5a) are then connected to the base profile (3). The top profile (4a, 5a) is a U-shaped profile and the base profile (3) is a C-shaped profile.

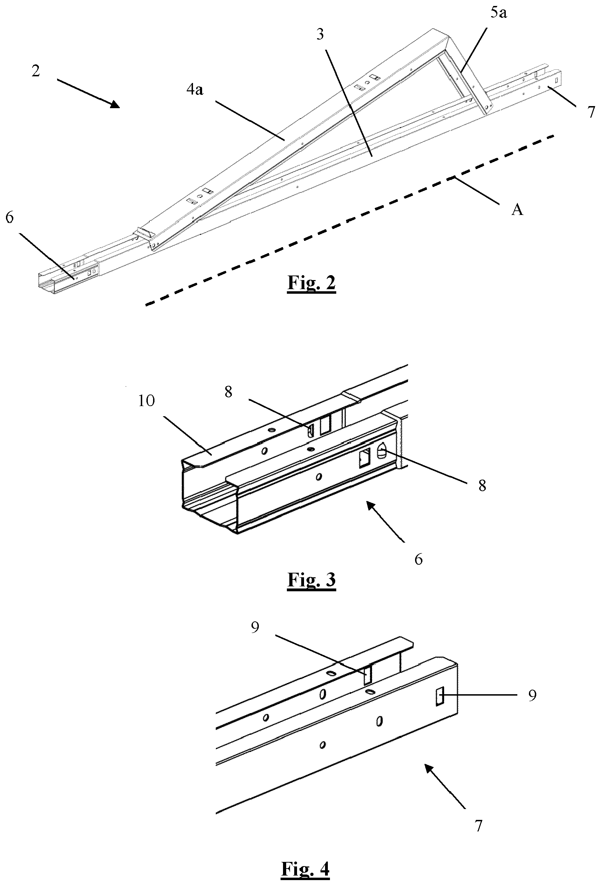

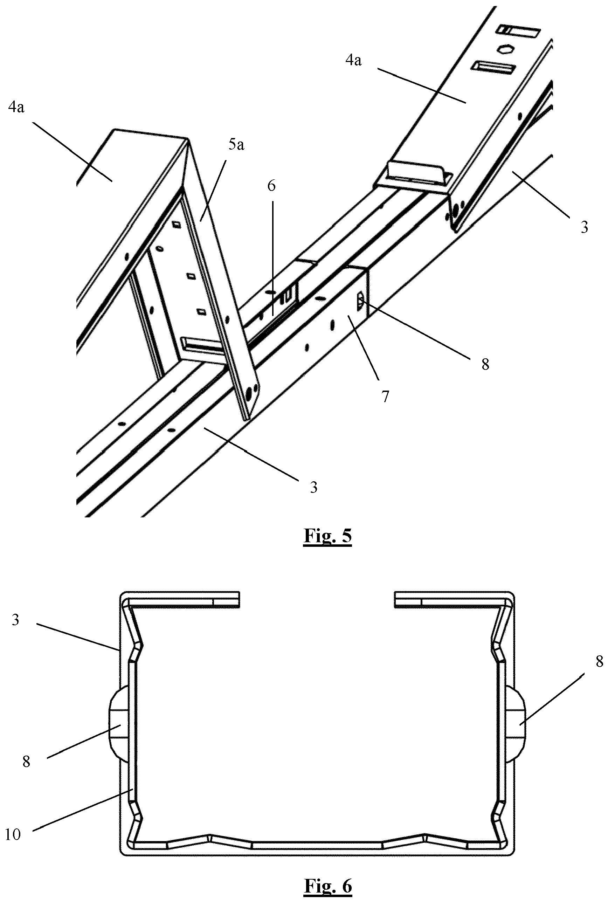

Viewed along its longitudinal direction (A), the base profile (3) comprises a first end (6) which is tapered and a second end (7) which is situated opposite this first end (6). The first end (6) of a said base profile (3) is always coupleable to the second end (7) of another said base profile (3). To this end, the first end (6) comprises (see Fig. 3) a tapered base part (10) having a C-shaped cross section, wherein this base part (10) comprises a base plate, two upright plates and two limbs connected to the upright plates parallel to the base plate. The base plate and the upright plates together form a U-shaped cross section and, with the limbs added, a C-shaped cross section is formed. The first end (6) furthermore comprises two click-fit elements (8) which are each connected to a respective upright plate. Here, these two click-fit elements (8) are at a distance apart, viewed along the longitudinal direction (A) of the base profile (3). Here, these click-fit elements (8) are always displaceably connected to their upright plate between at least two positions, being a base position (see Figs. 3 and 6) in which the click-fit element (8) extends beyond the outer surface of the base part (10), viewed along a plane at right angles to said longitudinal direction (A), and a pushed-in position in which the click-fit element (8) is pushed in, so that the click-fit element (8) extends inside the contours of the base part (10), viewed along a plane at right angles to said longitudinal direction (A). The second end (7) comprises (see Fig. 4) two fixing openings (9) which correspond to these click-fit elements (8), wherein, in a coupled position, the click-fit elements (8) are in their base position and extend through the respective fixing openings (9). This is clearly visible in Fig. 5. The position of the fixing openings (9) is such that, in a coupled position of the base profiles (3), the entire base part (10) extends in the second end (7). Said ends (6, 7) furthermore comprise additional openings with which a hand tool can engage in order to release the click-fit connections if it is desired to detach the base profiles (3) from each other again.

A solar panel is provided to be connected to the support profile part (4a) of the base unit (2) in such a manner that the solar panel extends virtually parallel to this support profile part (4a). Therefore, the solar panel extends at an angle with respect to the base profile (3).

For the first embodiment of the east/west-facing arrangement, one base unit (2) is illustrated in Fig. 7. Each base unit (2) comprises a base profile (3) and a top structure. The top structure comprises a folded top profile (4b, 5b) having a first support profile part (4b) and a successive second support profile part (5b) which is as long as the first support profile part (4b), wherein these support profile parts (4b, 5b) are each connected to the base profile (3) at opposite angles to the base profile (3), so that, in use, these profiles (3, 4b, 5b) form an isosceles triangle. The top profile (4b, 5b) is a U-shaped profile and the base profile (3) is a C-shaped profile. Furthermore, the top structure comprises a central support (11) which connects the top profile (4b, 5b) to the base profile (3) in a supporting manner at the location of the transition between the first support profile part (4b) and the second support profile part (5b). This central support (11) is a profile which forms an angle of virtually 90° with the base profile (3).

The base profile (3) is of a similar design to the base profile (3) of the south-facing arrangement and in this case is only slightly longer, because this base unit (2) is provided to support two solar panels.

A solar panel is provided to be connected to the first support profile part (4b) of a base unit (2) in such a way that the solar panel extends virtually parallel to the first support profile part (4b) and another solar panel is provided to be connected to the second support profile part (5b) in such a way that the solar panel extends virtually parallel to the second support profile part (5b). The solar panels therefore extend at an angle with respect to the base profile (3).

For the second embodiment of the east/west-facing arrangement, Fig. 8 shows one base unit (2).

Each base unit (2) comprises a base profile (3) and two folded top profiles (4a, 5a). Each top profile (4a, 5a) is of a similar design to the top profile (4a, 5b) of the south-facing arrangement and thus comprises a support profile part (4a) and a bearing profile part (5a) which extend at an angle to each other. In use, all profiles (3, 4a, 5a) thus form two triangles. The ends of each top profile (4a, 5a) are connected to the base profile (3) and the top profiles (4a, 5b) have an opposite orientation.

The base profile (3) is of a similar design to the base profile (3) of the south-facing arrangement and in this case is only slightly longer, because this base unit (2) is provided to support two solar panels.

Two solar panels are provided to be connected to the respective support profile parts (4a) of the base unit (2) in such a way that each solar panel extends virtually parallel to its support profile part (4a). Each solar panel therefore extends at an angle with respect to the base profile (3).

## Claims

1. Support structure (1) for installing solar panels on a surface, wherein this support structure (1) comprises at least a first and a second base unit (2), wherein each base unit (2) comprises an elongate base profile (3) which is provided to be connected directly or indirectly to the surface and a top structure which is connected to this base profile (3) and is provided to support at least one solar panel at an angle to the base profile (3), **characterized in that** each base profile (3), viewed along its longitudinal direction (A), comprises a first end (6) and comprises a second end (7) situated opposite this first end (6), and at least said first end (6) of the base profile (3) of the first base unit (2) and said second end (7) of the base profile (3) of the second base unit (2) are coupleable to each other, wherein, to this end, this first end (6) is tapered or expanded and this second end (7) is form-fitting with this first end (6) in such a way that the first end (6) of the base profile (3) of the first base unit (2) and the second end (7) of the base profile (3) of the second base unit (2) are coupleable to each other by sliding these ends (6, 7) inside each other.

2. Support structure (1) according to Claim 1, **characterized in that** the first ends (6) of said base profiles (3) are virtually identical and the second ends (7) of said base profiles (3) are virtually identical as well, so that the second end (7) of the base profile (3) of the first base unit (2) is also coupleable to the first end (6) of the base profile (3) of the second base unit (2) by sliding these ends (6, 7) inside each other.

3. Support structure (1) according to Claim 1 or 2, **characterized in that** the first end (6) of the base profile (3) of the first base unit (2) comprises at least one first fastening element (8) and the second end (7) of the base profile (3) of the second base unit (2) comprises a second fastening element (9) which corresponds to this first fastening element (8) in order to additionally fasten the base profiles (3) to each other when said first and second end (6, 7) are coupled to each other by sliding these ends (6, 7) inside each other.

4. Support structure (1) according to Claim 3, **characterized in that** the at least one first fastening element (8) is a click-fit element (8), so that the base profiles (3) of the base units (2) are coupleable to each other in a click-fittable way.

5. Support structure (1) according to Claim 4, **characterized in that** the click-fit element (8) is displaceable and the second fastening element (9) which corresponds to this click-fit element (8) is a fixing opening (9), wherein the click-fit element (8) is provided to extend through this fixing opening (9) when said first and second end (6, 7) are coupled to each other by sliding these ends (6, 7) inside each other.

6. Support structure (1) according to Claim 5, **characterized in that** the first end (6) of the base profile (3) of the first base unit (2) is tapered and, to this end, comprises a tapered base part (10) having an outer surface, wherein the click-fit element (8) is connected to this base part (10) and can assume at least two positions with respect to this base part (10), being a base position in which the click-fit element (8) extends beyond the outer surface of this base part (10), viewed along a plane at right angles to the longitudinal direction (A) of the base profile (3), and a pushed-in position in which the click-fit element (8) extends virtually inside the dimensions of this base part (10), viewed along a plane at right angles to the longitudinal direction (A) of the base profile (3).

7. Support structure (1) according to one of the preceding claims, **characterized in that** the base profiles (3) are C-profiles.

8. Support structure (1) according to one of the preceding claims, **characterized in that** each top structure comprises a top profile (4a, 5a; 4b, 5b), wherein the top profile (4a, 5a; 4b, 5b) is folded and connected to the base profile (3) in such a way that said profiles (3, 4a, 5a; 3, 4b, 5b) together, in use, form a triangle and wherein at least one solar panel is provided to be connected to the top profile (4a, 5a; 4b, 5b).

9. Support structure (1) according to Claim 8, **characterized in that** the top profile (4a, 5b; 4b, 5b) is connected to the base profile (3) with its respective ends.

10. Support structure (1) according to Claim 9, **characterized in that** said ends of the top profile (4a, 5a; 4b, 5b) are provided to be connected to the base profile (3) at a distance from the first end (6) and the second end (7), respectively, so that said ends (6, 7) of the base profile (3) are freely accessible.

11. Support structure (1) according to one of Claims 8 to 10, **characterized in that** the edges of the top profile (4a, 5a: 4b, 5b) which extend along the longitudinal direction are folded over.

12. Support structure (1) according to one of the preceding claims, **characterized in that** the top profile (4a, 5a) is folded in such a way that the top profile (4a, 5a) comprises a support profile part (4a) which extends along a first direction and a bearing profile part (5a) which adjoins this support profile part (4a) and extends along a second direction which forms an angle with the first direction, and wherein this top profile (4a, 5a) is connected to the base profile (3) in such a way that said profiles (3, 4a, 5a) together, in use, form a triangle and wherein a solar panel is provided to be connected to the support profile part (4a).

13. Support structure (1) according to one of Claims 1 to 11, **characterized in that** the top profile (4b, 5b) is folded in such a way that the top profile (4b, 5b) comprises a first support profile part (4b) which extends along a first direction and a second support profile part (5b) which adjoins this first support profile part (4b) and extends along a second direction, wherein the first and the second support profile part (4b, 5b) together form an obtuse angle and wherein the top structure furthermore comprises a central support (11) which connects the top profile (4b, 5b) to the base profile (3) at the location of the transition between the first support profile part (4b) and the second support profile part (5b) in a supporting way, wherein, in use, said profiles (3, 4b, 5b) together with the central support (11) form two mutually opposite triangles and wherein a solar panel is provided to be connected to the first support profile part (4b) and a solar panel is provided to be connected to the second support profile part (5b).
